(19) Europäisches Patentamt European Patent Office Office européen des brevets

(11) **EP 2 654 447 B1**

(12) **EUROPEAN PATENT SPECIFICATION**

(45) Date of publication and mention of the grant of the patent:
**25.02.2015 Bulletin 2015/09**

(21) Application number: **11808629.7**

(22) Date of filing: **21.12.2011**

(51) Int Cl.:
*A23G 9/24* $^{(2006.01)}$     *A23G 9/48* $^{(2006.01)}$
*A23G 1/30* $^{(2006.01)}$

(86) International application number:
**PCT/EP2011/073580**

(87) International publication number:
**WO 2012/085077 (28.06.2012 Gazette 2012/26)**

(54) **A FROZEN CONFECTION PRODUCT COMPRISING AN AERATED COATING AND A PROCESS FOR MAKING SUCH A PRODUCT**

GEFRORENES KONFEKTPRODUKT MIT LUFTDURCHSETZTEM ÜBERZUG UND VERFAHREN ZUR HERSTELLUNG EINES SOLCHEN PRODUKTES

PRODUIT DE CONFISERIE GLACÉ À ENROBAGE AÉRÉ ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2010 EP 10196874**

(43) Date of publication of application:
**30.10.2013 Bulletin 2013/44**

(73) Proprietors:
• **Unilever PLC**
**London, Greater London EC4Y 0DY (GB)**
Designated Contracting States:
**CY GB IE MT**
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**

(72) Inventors:
• **HODDLE, Andrew**
**Bedford**
**Bedfordshire MK44 1LQ (GB)**
• **ZHU, Shiping**
**Bedford**
**Bedfordshire MK44 1LQ (GB)**

(74) Representative: **van Benthum, Wilhelmus A. J.**
**Unilever N.V.**
**Unilever Patent Group**
**Olivier van Noortlaan 120**
**3133 AT Vlaardingen (NL)**

(56) References cited:
**EP-A1- 1 374 692**     **EP-A2- 0 410 507**
**WO-A1-01/15543**     **JP-A- 1 144 934**
**JP-A- 2004 267 108**     **JP-B- 6 087 744**
**US-A1- 2003 175 385**

## Description

### TECHNICAL FIELD OF THE INVENTION

The invention relates to a frozen confection product comprising an aerated coating and a process for making such a product.

### BACKGROUND OF THE INVENTION

It is well-known to apply coatings to frozen confectionery items. Fat-continuous coatings such as chocolate are particularly popular amongst consumers. However, products coated with this type of coating are increasingly perceived as being unhealthy due, at least in part, to the high calorie content of the coating. Health-conscious consumers are now looking for reduced-calorie versions of such products with the same sensory properties of conventional coated products.
An aerated coating is expected to have a lower calorific value per unit volume than an unaerated coating. This is because a portion of the volume of the aerated coating comprises a gas.
EP 1 374 692 (APV Systems Limited) discloses a process for producing aerated confectionery coatings. The process is said to be particularly applicable to enrobing processes, however the possibility of using the process to feed a bath of coating material for use in a dipping process is also mentioned.
JP6087744 (FUJI OIL LTD) discloses a coated ice cream comprising a water in oil chocolate aerated coating, said coating comprising 1% of sucrose fatty acid ester having an HLB of 2.
A dipping process is a convenient way to apply a coating to a frozen confection product, especially if the product is on a stick. Such a process necessitates the coating composition being maintained in liquid form, sometimes for several hours. However, it has been found that the limited stability of aerated coatings, particularly with respect to overrun, makes the use of such a process unattractive.
In a dipping process, the thickness of the final coating is determined by how much of the excess coating material is removed due to the effects of gravity, i.e. the more viscous the coating, the thicker the coating. It has now been found that when a fat-continuous coating is aerated its viscosity increases. Therefore, when a dipping process is used, the thickness of the resultant coating can be higher for an aerated coating than for an unaerated coating. This can mean that substituting an unaerated coating for an aerated coating can actually increase the calorie content of a coated product.
The present invention seeks to provide a frozen confection product comprising an aerated fat-continuous coating, and also a simple and economical process for making such a product.

### TESTS AND DEFINITIONS

As used herein the term "comprising" encompasses the terms "consisting essentially of" and "consisting of". Unless otherwise indicated all percentages refer to the percentage by weight, with the exception of percentages cited in relation to overrun. It should be noted that in specifying any range of values or amounts, any particular upper value or amount can be associated with any particular lower value or amount. The disclosure of the invention as found herein is to be considered to cover all embodiments as found in the claims as being multiply dependent upon each other irrespective of the fact that claims may be found with multiple dependency or redundancy.

#### Aeration and overrun

The term "aerated" means that gas has been intentionally incorporated into a coating, for example by mechanical means. The gas can be any gas, but is preferably a food-grade gas such as air, nitrogen or carbon dioxide.
The extent of aeration is defined in terms of "overrun", which is defined in percentage terms as follows:

$$overrun = \frac{(sample\ weight\ before\ aeration) - (sample\ weight\ after\ aeration)}{(sample\ weight\ after\ aeration)} \times 100$$

where the sample weight both before and after aeration is for the same given fixed volume. Overrun is measured at atmospheric pressure.

#### Sucrose ester

Sucrose esters can be obtained by esterifying at least one of the hydroxyl groups of a sucrose molecule.

Preferably, the sucrose ester is a fatty acid sucrose ester, wherein the fatty acids react with one or more hydroxyl group to form mono-, di-, tri- or multi-fatty acid esters, or a mixture thereof. The sucrose ester preferably comprises a mixed ester or homo-ester. The fatty acid is preferably selected from the group consisting of lauric acid, myristic acid, palmitic acid, steric acic and mixtures thereof.

The sucrose esters including L-195 (sucrose laurate), S070 (sucrose stearate), S-170, S-270, S-370, S-570, S-770, S-970, S-1670, P-170 (sucrose palmitate), O-170 (sucrose oleate) and B-370 (sucrose behenate), and the like were obtained from Mitsubishi-Kagaku Foods Corporation, Tokyo, Japan. SP10 and SP50 from Sisterna were also used.

HLB value

The HLB value is given by the following equation:

$$HLB = 20 \times \frac{M_h}{M}$$

where $M_h$ is the molecular mass of the hydrophilic part of the molecule and M is the molecular mass of the whole molecule, thus giving a value on an arbitrary scale of 0 to 20.

For fatty acid esters, the HLB value is given by the equation:

$$HLB = 20 \times \frac{(1-S)}{A}$$

where S is the saponification value, and A is the acid number of the fatty acid. Therefore and HLB value of 0 corresponds to a completely hydrophobic molecule and an HLB value of 20 corresponds to a completely hydrophilic molecule. Typical HLB values are:

| | |
|---|---|
| 0 to 3 | an anti-foaming agent |
| 4 to 6 | a water-in-oil emulsifier |
| 7 to 9 | a wetting agent |
| 8 to 18 | an oil-in-water emulsifier |
| 13 to 15 | a detergent |
| 10 to 18 | a solubiliser or a hydrotrope |

Fat-continuous coatings

Fats are generally triglycerides (i.e. triesters of glycerol and fatty acids). The term "fat" includes oils that are liquid at room temperature, as well as fats that are solid. The fat-continuous coating is preferably a chocolate coating. The term "chocolate" as used herein includes dark chocolate, milk chocolate, white chocolate, flavoured chocolate, couverture chocolate, compound chocolate (i.e. made from a combination of cocoa solids, non-cocoa butter, vegetable fat and sweeteners) and mixtures thereof. A chocolate coating may also comprise inclusions such as nuts or pieces thereof, dried fruit (e.g. raisins) or pieces thereof, biscuit and mixtures thereof. The chocolate must, however, remain substantially anhydrous. The term "substantially anhydrous" means comprising no more than 5%, preferably no more than 3%, more preferably no more than 1 % w/w water.

Coating thickness

The volume of the coating is related to the thickness of the coating. The volume of the product with and without the coating can be measured by displacement in water. The volume of a coated product is determined by weighing the volume of water displaced by submerging the coated product. The coating is then removed and the volume measurement repeated on the uncoated product. The volume of the coating is calculated by subtracting the volume of the uncoated product from the volume of the coated product. The average thickness of the coating is calculated by dividing the volume of the coating by the surface area of the product that is covered by the coating.

The product is also weighed with and without the coating, thus allowing the density of the coating to be determined using Archimedes' principle.

Optical microscopy

Optical microscopy was used to measure the bubble morphology in the aerated coating. The samples were placed on a glass slide and covered with a cover slip. Optical images were taken using a Polyvar microscope (Reichert-Jung Limited). For the morphological study of foams, a 200 $\mu$m spacer was used between the slide and the cover slip to protect the bubbles from deformation.

Stability of aerated chocolate

The stability of aerated chocolate at warm temperature was studied by maintaining the aerated chocolate samples at 45°C. The weight in a fixed volume was measured at determined time points to determine the change in overrun with time. Microscope images were also obtained to assess the morphology of the gas bubbles in the aerated chocolate.

Preparation of chocolate comprising sucrose ester

Sucrose stearate (Ryoto S-370, S-270, S-570) with high melting temperatures were thoroughly mixed with a small amount of molten chocolate in roughly around 1:2 weight ratio at warm temperature to produce a slurry which was then diluted with further chocolate up to a total weight of 500g. The concentration of sucrose stearate in the mixture ranged from 0.5 to 5% by weight. In order to ensure all the sucrose ester has been dissolved in the chocolate, the mixtures were kept in an oven at 65°C for at least one hour before aeration.

Aeration of chocolate

Preferably chocolate is mechanically aerated, wherein the term "mechanically aerated" excludes aeration means using propellant, such as nitrous oxide. In particular, a high speed stirrer, a high speed whisk or a homogeniser can be used to mechanically aerate chocolate mixtures.
Aeration can be carried out using a Kenwood KMX50 Mixer at a certain speed (lowest speed 1 to highest speed 7) for a certain time (5 to 20 min) at a temperature of 65°C for sucrose stearates (S-270, S-370 and S-570). The aerated mixtures were kept at a warm temperature (40 to 50°C) or cooled down to room temperature. The chocolate mixture comprising L-195 was aerated at a temperature of from 30 to 45°C.

Air knife

An "air knife" is a source of a directed stream of gas. The gas is preferably a food-grade gas, more preferably air, although nitrogen or other gas can be used. An air knife generally comprises a hollow body, a fan to accelerate gas through the body, and an aperture in the body through which the laminar gas stream passes. In a preferred embodiment the aperture of the air knife is elongated.

## SUMMARY OF THE INVENTION

In a first aspect, the present invention relates to a coated frozen confection product comprising an aerated fat-continuous coating, the coating having an overrun of 20 to 200% and comprising from 0.05 to 5% by weight of at least one sucrose ester with an HLB value of between 1 and 9, wherein the coating has an average thickness of 0.5 to 2.8 mm.
Preferably the coating contains at least 0.25% by weight of at least one sucrose ester with an HLB value of between 1 and 9.
In a first preferred alternative of the invention the coating contains up to 1 % by weight, preferably up to 0.5% by weight, of at least one sucrose ester with an HLB value of between 1 and 9.
In a second preferred alternative of the invention the coating contains from 1 to 5% by weight of at least one sucrose ester with an HLB value of between 1 and 9.
Certain sucrose esters can aerate fat-continuous coatings (e.g. chocolate coatings) resulting in aerated coatings comprising small bubbles. The sucrose ester preferably has an HLB value of between 3 and 8, more preferably between 4 and 8. In a preferred embodiment the sucrose ester is a fatty acid sucrose ester.
A particular advantage of providing a coated frozen confection according to the present invention is that the aerated fat-continuous coating comprises small gas bubbles, the majority of which are invisible to the naked eye and thus do not detract from the visible appearance of the coated frozen confection product.
Preferably, 80% of the cumulative area weighted size air bubble distribution of the aerated fat-continuous coating is below 100 $\mu$m, more preferably below 90 $\mu$m, most preferably below 80 $\mu$m.

Preferably, 95% of the cumulative weighted size distribution is below 125 $\mu$m, preferably below 100 $\mu$m.

Preferably, 99% of the cumulative weighted size distribution is below 150 $\mu$m.

The aerated coating has an overrun of at least 20%, preferably at least 25%, more preferably at least 30%. Furthermore, the overrun of the aerated coating is at most 200%, preferably at most 150%, more preferably at most 100%, even more preferably at most 60%.

Preferably, the overrun of the aerated coating is stable. In this instance, the term "stable" means that when the aerated coating is kept at a temperature of at least 40°C, the overrun of the aerated coating decreases by no more than 20%, more preferably by no more than 10% and most preferably by no more than 5%, over a period of 24 hours. For example, when a stable overrun is defined as one which decreased by no more than 20%, an initial overrun of 200% can only decrease to 180% over a period of 24 hours, beyond which the overrun is not stable.

A particular advantage of coatings having a stable overrun is that they are suitable for coating products via a dipping process. Such a process necessitates the coating composition being maintained in liquid form, sometimes for several hours. In a dipping process the aerated liquid coating is preferably maintained in a reservoir at a temperature of 40 to 50°C.

From a standpoint of calorific reduction, the frozen confection product comprises a thin layer of the aerated fat-continuous coating. Thus the coating has an average thickness of no more than 2.8 mm, more preferably no more than 2.7 mm, most preferably no more than 2.5 mm. The coating has an average thickness of at least 0.5 mm, more preferably at least 1.0 mm, most preferably at least 1.2 mm. Preferably the volume of the coated product is no more than 20% greater than the volume of the uncoated product, more preferably no more than 18% greater. The volume of the coated product is preferably at least 8% greater than the uncoated product, more preferably at least 10% greater.

For convenience of consumption, the coated frozen confection product preferably comprises a stick.

In a second aspect, the present invention relates to a process for coating a frozen confection product with an aerated fat-continuous coating, the process comprising the steps of:

(a) providing the aerated coating in liquid form, wherein the aerated coating has an overrun of 20 to 200% and comprises from 0.05 to 5% by weight of at least one sucrose ester;
(b) dipping the frozen confection product into the aerated liquid coating;
(c) removing the frozen confection product from the aerated liquid coating; characterised in that the aerated coating comprises from 0.05 to 5% by weight of at least one sucrose ester with an HLB value of 1 to 9, and that the process comprises the additional and subsequent step of:
(d) passing the frozen confection product through at least one laminar airflow projected by an air knife.

In a dipping process, the thickness of the final coating is determined by how much of the excess coating material is removed due to the effects of gravity, i.e. the more viscous the coating, the thicker the coating. We have found that when a fat-continuous coating is aerated its viscosity increases. Therefore, when a conventional dipping process is used, the thickness of the resultant coating can be higher for an aerated coating than for an unaerated coating. Moreover, when a frozen confection product is coated in a dipping process, the coating solidifies rapidly on contact with the cold surface of the product. This can mean that substituting an unaerated coating for an aerated coating can actually increase the calorie content of a coated product.

From a standpoint of calorific reduction, we have recognised that it is important to control the thickness of the coating on the frozen confection product. We have found that the thickness of the aerated coating can be significantly reduced by passing the frozen confection product through at least one laminar airflow as the product is removed from the aerated liquid coating. Surprisingly, the overrun of the coating is maintained during this process. Without wishing to be bound by theory, we believe that this is because the liquid coating rapidly solidifies at its interface with the cold surface of the frozen confection. Thus the frozen confection product comprises an inner layer of solid aerated coating composition, with an outer layer of liquid aerated coating composition. It is this outer liquid layer that is removed by the force of the laminar airflow(s) as the frozen confection passes through said airflow(s).

An air knife can conveniently be used to project a laminar airflow. An air knife generally comprises a hollow body, a fan to accelerate gas through the body, and an aperture in the body through which the laminar gas stream passes. The aperture of the air knife is preferably elongated, more preferably the aperture is an elongated slot.

In order to achieve even coating of the frozen confection product, it is preferred that the product passes through multiple laminar airflows, more preferably intersecting laminar airflows. It is preferred to maximise the surface area of the coated product that passes through a laminar airflow, therefore the number of intersecting laminar airflows may vary according to the shape of the product. In a particularly preferred embodiment the frozen confection product passes through a point at which two laminar airflows intersect.

The quantity of aerated coating that is removed after dipping of the frozen confection product (and hence the thickness of the aerated coating) can be influenced in a number of ways. For example, one or more of the following parameters may be controlled: velocity of airflow(s); dip speed of product; temperature of airflow(s); angle of airflow(s);

distance between product and air knife; height of air knife above dip level; and any combination thereof.

Typically, the velocity of airflow is measured at the aperture of the air knife. The velocity of the airflow, and the force with which the airflow strikes the aerated coating should not be so great as to displace the aerated coating from the surface of the frozen confection product. The velocity of airflow is preferably at least 1 m·s$^{-1}$, more preferably at least 2 m·s$^{-1}$, most preferably at least 3 m·s$^{-1}$. The velocity of the airflow is preferably no more than 30 m·s$^{-1}$, more preferably no more than 20 m·s$^{-1}$, most preferably no more than 10 m·s$^{-1}$

Each air knife may be positioned on a movable mounting so that the height, direction and/or angle of the airflow it provides is adjustable. The air knife may be stationary or movable during the process of the invention, preferably the air knife is stationary.

The air knife aperture(s) are preferably positioned from 3 to 40 cm above the top surface of the aerated liquid coating, more preferably from 4 to 35 cm and most preferably from 5 to 30 cm. The distance between the product and air knife aperture(s) is preferably from 0.2 cm to 10 cm, more preferably from 0.4 cm to 5 cm.

In certain embodiments, the airflow(s) may be directed such that they are opposite to the direction of travel of the frozen confection product takes on its removal from the aerated liquid coating. It is preferred that the airflow(s) are directed such that the angle of the airflow(s) with respect to the exposed surface of the coated product being contacted by said airflow(s) is in a range of 10 to 90 degrees. In a particularly preferred embodiment, the airflow(s) are substantially perpendicular to the exposed surface of the coated product being contacted by the directed airflow(s).

## DETAILED DESCRIPTION

The present invention will be further described in the following example.

Example 1

Frozen confection products were coated with an aerated fat-continuous coating comprising sucrose stearate (S-370) using the process of the present invention. The weight of a coated product was determined. The volume of the coated product was determined by weighing the volume of water displaced by submerging the coated product. The coating was removed and the weight and volume measurements were repeated on the uncoated product. The results obtained from two products coated with an aerated chocolate coating (samples A and B) are summarised in Table 1. For comparison, the results for two products coated with an unaerated chocolate coating (samples C and D) are included. The results for two frozen confection products coated with an aerated fat-continuous coating using a dipping process, but without passing the frozen confection product through at least one laminar airflow projected by an air knife (samples E and F) are also included.

Table 1

| Sample | Coated product | | Uncoated product | | Coating | | |
|---|---|---|---|---|---|---|---|
| | Wt(g) | Vol (mL) | Wt(g) | Vol (mL) | Wt(g) | Vol (mL) | % Wt of product |
| A | 84.9 | 125.0 | 66.1 | 105.4 | 18.8 | 19.6 | 22.1% |
| B | 86.0 | 125.4 | 66.9 | 106.0 | 19.1 | 19.4 | 22.2% |
| C | 93.9 | 124.5 | 67.9 | 101.5 | 26.0 | 23.0 | 27.7% |
| D | 94.3 | 125.1 | 68.4 | 103.6 | 25.9 | 21.5 | 27.5% |
| E | 98.6 | 132.0 | 60.1 | 93.2 | 38.5 | 38.8 | 39.0% |
| F | 98.3 | 132.7 | 60.9 | 95.7 | 37.4 | 37.0 | 38.0% |

The results show that an aerated coating contributes only about 22% by weight to the total product, whereas an unaerated coating contributes about 27.5%. Moreover, the total weight of the coated product is lower when the product is coated with an aerated coating. Furthermore, when an aerated coating is applied using a dipping process, passing the coated product through at least one laminar airflow projected by an air knife significantly reduces the weight of the coated product.

The average thickness of the coating is calculated by dividing the volume of the coating by the surface area of the product that is covered by the coating. The results for products A, B, C, D, E and F are summarised in Table 2.

Table 2

| Sample | Average coating thickness (mm) |
|--------|-------------------------------|
| A | 1.4 |
| B | 1.4 |
| C | 1.7 |
| D | 1.6 |
| E | 3.1 |
| F | 2.9 |

The results show that the process of the present invention significantly reduces the average coating thickness of an aerated coating applied using a dipping process.

The density of the coating can also be calculated from the above data using Archimedes' principle. Furthermore, if the density of the unaerated coating is known, then the overrun of the coating can also be determined as follows:

$$overrun = \frac{(density\ of\ unaerated\ coating) - (density\ of\ aerated\ coating)}{(density\ of\ aerated\ coating)} \times 100$$

For samples A, B, E and F the density of unaerated coating was 1.25 g/mL. Thus the overrun of the aerated coating was experimentally determined to be 30.3% for sample A, 27.0% for sample B, 26.0% for sample E and 23.7% for sample F.

Example 2

Vanilla ice cream lollies were produced and sticks were inserted to enable ease of dipping. The lollies were then dipped in a chocolate bath at 60°C containing 0.75% S370 (sucrose ester) which had been $CO_2$ Aerated

The lollies were then hung to dry, placed into wax paper sleeve and cooled in blast freezer.

The results are summarised in the following table.

| | Magnum 'Blank' Volume | Over Run (based on 1.25g/ml density of chocolate |
|--|--|--|
| 0.75% S370 $CO_2$ Aerated A | 94.4ml | 38% |
| 0.75% S370 $CO_2$ Aerated B | 94.6ml | 37% |

Example 3

Aerated chocolate coatings (aerated by air) and containing 0.5% Sucrose Esters were produced. The results are summarised in the following table

| Sucrose ester | SE %(wtw) | OR (%) |
|---------------|-----------|--------|
| S570 | 0.5 | 46 |
| S570 | 0.5 | 30 |
| SE-50 | 0.5 | 35 |
| S770 | 0.5 | 40 |
| S570 | 0.5 | 30 |

**Claims**

**1.**   A coated frozen confection product comprising an aerated fat-continuous coating with an overrun of 20 to 200%, **characterised in that** the coating comprises from 0.05 to 5% by weight of at least one sucrose ester with an HLB value of between 1 and 9, wherein the coating has an average thickness of from 0.5 to 2.8 mm.

2. A coated frozen product according to claim 1 wherein the coated product has a volume that is from 8 to 20% greater than the volume of the uncoated product.

3. A coated frozen confection product according to claim 1 wherein the coating has a fat content of 35 to 70% by weight.

4. A coated frozen confection product according any one of the preceding claims wherein the coating covers at least 90% of the frozen confection product.

5. A coated frozen confection product according to any one of the preceding claims wherein the coating is a chocolate coating.

6. A coated frozen confection product according to any one of the preceding claims wherein the frozen confection product comprises a stick.

7. A process for coating a frozen confection product with an aerated fat-continuous coating, the process comprising the steps of:

   (a) providing the aerated coating in liquid form, wherein the aerated coating has an overrun of 20 to 200%;
   (b) dipping the frozen confection product into the aerated liquid coating; and
   (c) removing the frozen confection product from the aerated liquid coating, **characterised in that** the aerated coating comprises from 0.05 to 5% by weight of at least one sucrose ester with an HLB value of between 1 and 9, and that the process comprises the additional and subsequent step of:
   (d) passing the frozen confection product through at least one laminar airflow projected by an air knife.

8. A process according to claim 6 wherein the frozen confection product passes through multiple laminar airflows.

9. A process according to claim 6 or claim 7 wherein the laminar airflow(s) have a velocity of from 1 to 30 m·s$^{-1}$.

10. A process according to claim 7 or claim 8 wherein the frozen confection product passes through intersecting laminar airflows.

11. A process according to any one of claims 6 to 9 wherein the aerated liquid coating is maintained in a reservoir at a temperature of 40 to 50°C.

12. A process according to any one of claims 6 to 10 wherein the aerated liquid coating is a chocolate coating.

**Patentansprüche**

1. Überzogenes gefrorenes Konfektprodukt, das einen durchlüfteten Überzug mit Fett als kontinuierlicher Phase mit einem Overrun von 20 bis 200 % aufweist, **dadurch gekennzeichnet, dass** der Überzug 0,05 bis 5 Gew.-% von zumindest einem Saccharoseester mit einem HLB-Wert von1 bis 9 aufweist, wobei der Überzug eine durchschnittliche Dicke von 0,5 bis 2,8 mm hat.

2. Überzogenes gefrorenes Produkt nach Anspruch 1,
   wobei das überzogene Produkt ein Volumen aufweist, das 8 bis 20 % größer als das Volumen des Produktes ohne Überzug ist.

3. Überzogenes gefrorenes Konfektprodukt nach Anspruch 1,
   wobei der Überzug einen Fettgehalt von 35 bis 70 Gew.-% aufweist.

4. Überzogenes gefrorenes Konfektprodukt nach einem der vorstehenden Ansprüche,
   wobei der Überzug mindestens 90 % des gefrorenen Konfektproduktes bedeckt.

5. Überzogenes gefrorenes Konfektprodukt nach einem der vorstehenden Ansprüche,

EP 2 654 447 B1

wobei der Überzug ein Schokoladenüberzug ist.

**6.** Überzogenes gefrorenes Konfektprodukt nach einem der vorstehenden Ansprüche,
wobei das gefrorene Konfektprodukt einen Stab aufweist.

**7.** Verfahren zum Überziehen eines gefrorenen Konfektproduktes mit einem mit Luft durchsetzten Überzug mit Fett als kontinuierlicher Phase,
wobei das Verfahren die folgenden Schritte aufweist:

(a) Bereitstellen des mit Luft durchsetzten Überzugs in flüssiger Form, wobei der mit Luft durchsetzte Überzug einen Overrun von 20 bis 200 % aufweist;
(b) Tauchen des gefrorenen Konfektproduktes in die mit Luft durchsetzte Überzugsflüssigkeit; und
(c) Entnehmen des gefrorenen Konfektproduktes aus der mit Luft durchsetzten Überzugsflüssigkeit,
**dadurch gekennzeichnet, dass** der mit Luft durchsetzte Überzug 0,05 bis 5 Gew.-% von zumindest einem Saccharoseester mit einem HLB-Wert von 1 bis 9 aufweist und dass das Verfahren den zusätzlichen und nachfolgenden Schritt aufweist:
(d) Leiten des gefrorenen Konfektproduktes durch zumindest eine laminare Luftströmung, die von einem Luftschaber ausgestoßen wird.

**8.** Verfahren nach Anspruch 6,
wobei das gefrorene Konfektprodukt mehrere laminare Luftströmungen durchläuft.

**9.** Verfahren nach Anspruch 6 oder 7,
wobei der laminare Luftstrom (die laminaren Luftströmungen) eine Geschwindigkeit von 1 bis 30 m·s$^{-1}$ hat (haben).

**10.** Verfahren nach Anspruch 7 oder 8,
wobei das gefrorene Konfektprodukt sich schneidende laminare Luftströmungen durchläuft.

**11.** Verfahren nach Anspruch einem der Ansprüche 6 bis 9,
wobei die mit Luft durchsetzte Überzugsflüssigkeit bei einer Temperatur von 40 bis 50 °C in einem Behälter gehalten wird.

**12.** Verfahren nach einem der Ansprüche 6 bis 10,
wobei die mit Luft durchsetzte Überzugsflüssigkeit ein Schokoladenüberzug ist.

**Revendications**

**1.** Produit de confiserie glacé enrobé comprenant un enrobage continu en graisse aéré avec un dépassement de 20 à 200 %, **caractérisé en ce que** l'enrobage comprend de 0,05 à 5 % en poids d'au moins un ester de sucrose avec une valeur HLB de 1 à 9, et dans lequel l'enrobage présente une épaisseur moyenne de 0,5 à 2,8 mm.

**2.** Produit de confiserie enrobé selon la revendication 1, dans lequel le produit enrobé présente un volume qui est de 8 à 20 % supérieur au volume du produit non enrobé.

**3.** Produit de confiserie glacé enrobé selon la revendication 1, dans lequel l'enrobage présente une teneur en graisse de 35 à 70 % en poids.

**4.** Produit de confiserie glacé enrobé selon l'une quelconque des revendications précédentes, dans lequel l'enrobage couvre au moins 90 % du produit de confiserie glacé.

**5.** Produit de confiserie glacé enrobé selon l'une quelconque des revendications précédentes, dans lequel l'enrobage est un enrobage de chocolat.

**6.** Produit de confiserie glacé enrobé selon l'une quelconque des revendications précédentes, dans lequel le produit de confiserie glacé comprend un bâtonnet.

**7.** Procédé pour l'enrobage d'un produit de confiserie glacé avec un enrobage continu en graisse aéré, le procédé comprenant les étapes consistant :

(a) à fournir l'enrobage aéré dans une forme liquide, dans laquelle l'enrobage aéré présente un dépassement de 20 à 200 % ;
(b) à immerger le produit de confiserie glacé dans l'enrobage liquide aéré ; et
(c) à prélever le produit de confiserie glacé de l'enrobage de liquide aéré,
**caractérisé en ce que** l'enrobage aéré comprend de 0,05 à 5 % en poids d'au moins un ester de sucrose avec une valeur HLB de 1 à 9, et **en ce que** le procédé comprend l'étape supplémentaire et subséquente consistant :
(d) à faire passer le produit de confiserie glacé à travers au moins un écoulement d'air laminaire projeté par une lame d'air.

8. Procédé selon la revendication 6, dans lequel le produit de confiserie glacée passe à travers des écoulements d'air laminaires multiples.

9. Procédé selon la revendication 6 ou la revendication 7, dans lequel le(les) écoulement(s) d'air laminaire(s) présente(nt) une vitesse de 1 à 30 m.s$^{-1}$.

10. Procédé selon la revendication 7 ou la revendication 8, dans lequel le produit de confiserie glacé passe à travers des écoulements d'air laminaires qui se croisent.

11. Procédé selon l'une quelconque des revendications 6 à 9, dans lequel l'enrobage liquide aéré est maintenu dans un réservoir à une température de 40 à 50°C.

12. Procédé selon l'une quelconque des revendications 6 à 10, dans lequel l'enrobage liquide aéré est un enrobage de chocolat.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1374692 A
- JP 6087744 B